# EUROPÄISCHE PATENTSCHRIFT

(11) **EP 3 790 497 B1**
(45) Veröffentlichungstag und Bekanntmachung des Hinweises auf die Patenterteilung: **28.12.2022**
(21) Anmeldenummer: 19725927.8
(22) Anmeldetag: 05.05.2019
(51) Int. Cl.: A61C 8/00

(54) **IMPLANTATAUFBAU FÜR EIN ENOSSALES ZAHNIMPLANTAT**
ABUTMENT FOR AN ENDOSSEOUS DENTAL IMPLANT
STRUCTURE D'IMPLANT DESTINÉE À UN IMPLANT DENTAIRE ENDO-OSSEUX

(30) Priorität: 07.05.2018 DE 102018110946; 10.03.2019 DE 102019203222
(43) Veröffentlichungstag der Anmeldung: 17.03.2021
(73) Patentinhaber: Epiphanostics GmbH, 83607 Holzkirchen (DE)
(72) Erfinder: KIRSCH, Axel, 70794 Filderstadt (DE); KRATT, Uwe Ernst, 71263 Weil der Stadt (DE)
(74) Vertreter: Nobbe, Matthias
(86) Internationale Anmeldenummer: PCT/DE2019/100402
(87) Internationale Veröffentlichungsnummer: WO 2019/214773

(56) Entgegenhaltungen:
- EP-A1- 2 647 347
- WO-A1-2016/170376
- US-A- 4 832 601
- US-A1- 2014 162 211

## Beschreibung

Die Erfindung betrifft ein Abutment für ein enossales Zahnimplantat und ein in den Kieferknochen einsetzbares Zahnimplantat mit einem Grundkörper und dem erfindungsgemäßen Abutment.

Solche in der Regel aus Titan oder Titanlegierungen bestehende Zahnimplantate weisen heutzutage meist der natürlichen Zahnwurzel angenäherte Formen auf, wie zum Beispiel schraubenförmige, zylindrische oder als Stufenzylinder ausgebildete Grundkörper.

Bei den meisten Implantatsystemen werden auf die eigentlichen Implantate, die sogenannten Grundkörper, Implantataufbauten aufgesetzt, welche durch eine in der Längsachse des Implantats in den Implantatkörper einschraubbare Schraube mit dem Implantat verbunden werden. Diese stellen die Verbindung zwischen Implantat und prothetischer Konstruktion auf dem Implantat her. Dabei werden herausnehmbare und festsitzende Konstruktionen unterschieden.

Bei derartigen Implantaten besteht häufig das Problem, daß die gewünschte Längsachse des Aufbaus nicht mit der Längsachse des Implantats übereinstimmt. Dieses Problem tritt insbesondere dann auf, wenn auf mehreren Implantaten mit nicht paralleler Achsrichtung möglichst parallele Aufbauten erwünscht sind.

In manchen Anwendungsfällen besteht aber auch das Bedürfnis, den Aufbau/Befestigungskopf winkelmäßig verschwenkt gegenüber dem Grundkörper anordnen zu können, da der Grundkörper, z.B. bedingt durch lokale Knochenatrophie, gelegentlich schräg in den Kieferknochen implantiert werden muss, während der Befestigungskopf zum optimalen Anbringen des Zahnersatzes und der Einleitung der von diesem aufgenommenen Kaukräfte eine andere winkelmäßige Ausrichtung haben soll.

Hierfür ist es bereits bekannt, am koronalen Ende eines Grundkörpers einen Kugelkopf vorzusehen, auf dem ein Gegenpart mittels einer auf die Oberfläche des Kugelkopfes wirkenden Sicherungsschraube gegen ein Verdrehen gesichert sein soll. Dabei ist aber insbesondere nicht gewährleistet, daß der Gegenpart fest und sicher mit dem Grundkörper verbunden werden kann.

So ist für diese Problemstellungen eine Reihe von Lösungsvorschlägen im Stand der Technik bekannt.

Eine einstellbare Stütze für einen prothetischen Zahn gemäß der US4832601 umfasst ein Widerlagerelement mit einer Öffnung zur Aufnahme eines Bolzenelements, das mit einem Mutternelement in Eingriff steht. Ein Anschlagelement ist sandwichartig zwischen einem Kopfabschnitt des Bolzenelements und einem vergrößerten Kragenabschnitt des Mutternelements angeordnet. Das Anschlagelement kann in eine gewünschte Position geschwenkt werden, und die Bolzen- und Mutterelemente werden festgezogen, um das Anschlagelement in der gewünschten Position zu verriegeln. Ein Prothesenzahn, der eine Öffnung mit komplementärer Form in Bezug auf das Anschlagelement aufweist, greift in das Anschlagelement ein, um die Winkelausrichtung des Anschlagelements anzunehmen.

Weiterhin offenbart die US5194000 ein Implantat zur Verwendung in der Kiefer- und Zahnchirurgie, insbesondere in der Unterkieferchirurgie, mit einem Bauteil in Form eines im Wesentlichen zum Implantat koaxialen Kegelstumpfes, an dessen koronalem Ende ein kugelförmiges Element vorgesehen ist, wobei das kugelförmige Element von einer entsprechenden, in der Prothese vorgesehenen Aushöhlung aufgenommen werden kann, um die Prothese gegenüber dem Implantat festzuhalten.

Eine andere Lösung wird in der US5195891 vorgeschlagen. Diese betrifft ein Implantatsystem und insbesondere eine Verankerungseinrichtung zur einstellbaren Halterung eines oder mehrerer prothetischer Zähne oder Einrichtungen in einer erwünschten Orientierung relativ zu dem Einsetzweg einer Wiederherstellungseinrichtung, insbesondere bei von Patienten herausnehmbaren Wiederherstellungseinrichtungen.

Die US5302125 beschreibt ein Zahnersatzimplantat, das eine Winkelrotations-fähigkeit und eine verbesserte Verriegelung zwischen der Implantathalterung und der Pfeilerprothese aufweist.

Eine weitere Lösung zur Ausrichtung des auf den Implantatgrundkörpern angebrachten Aufbaus, deren Längsachsen zueinander einen Winkel von bis zu 45° einschließen, wird beispielsweise in der DE-OS-19959366 vorgeschlagen. In dieser Druckschrift wird ein Implantataufbau vorgeschlagen, welcher mittels einer Schraube mit dem Implantat verschraubbar ist, wobei der Implantataufbau mit einem Pfosten, sowie aus einem basal des Pfostens auf das Implantat aufsetzbaren Verbindungsteil besteht, wobei der Pfosten in einer bis zu einem Grenzwinkel beliebig wählbaren Anwinkelung seiner Längsachse gegenüber der Längsachse der Schraube durch ein Fügeverfahren, vorzugsweise durch Schweißung oder Klebungen mit dem Verbindungsteil verbindbar ist. Diese Ausführungsform hat jedoch den Nachteil, dass nach der Fügung durch Schweißung oder Klebung die Bauteile im Aufbau zueinander festgelegt sind und deren Stellung zueinander nicht mehr korrigiert werden kann.

Eine Weiterentwicklung des Aufbaus in Form eines Abutments für Dentalimplantate ist in der EP1547543 beschrieben. Das dort beschriebene Abutment für die Verankerung einer Dentalprothese an einem Dentalimplantat ist mit einer Pfostenanordnung und einer mit dieser verbundenen Einschraubkonstruktion zum Einschrauben in das Dentalimplantat versehen und weist zwischen der Pfostenanordnung und der Einschraubkonstruktion ein Kugelgelenk auf. An der Einschraubkonstruktion und der Stiftanordnung sind Einrichtungen ausgebildet, mit denen das Kugelgelenk an dem Implantat und die Pfostenanordnung an dem Kugelgelenk und das Kugelgelenk in sich selbst starr festgelegt werden können. Nachteilig bei dieser Konstruktion sind die mechanische Festigkeit sowie die aus einer Vielzahl von Einzelteilen bestehende Konstruktion.

Gemäß der WO2008/019774 umfasst ein Zahnimplantat zwei als Primärkrone und Sekundärkrone ausgebildete Implantatteile, wobei die Sekundärkrone Träger einer Prothese bzw. Brücke ist, die auf den Außenmantel der Sekundärkrone aufsetzbar ist. Der Außenmantel der Sekundärkrone ist zumindest in einer Ebene zumindest annähernd kreisförmig bzw. teilkreisförmig ausgebildet und in einem Lager der Prothese oder Verblendung schwenkbar aufnehmbar.

Eine zusammengesetzte Winkelverbindung zur Verbindung eines Abutments mit einem Zahnimplantat in einem vordefinierten Winkel ist in der WO2010/150188 beschrieben. Die zusammengesetzte Winkelverbindung umfasst ein Basalelement, das mit dem Zahnimplantat verbindbar ist, und ein Apikalelement, das mit dem Abutment verbindbar ist. Das apikale Element ist mit dem basalen Element verbunden, das einen vordefinierten Winkel bildet. Das Zusammensetzen der Verbundwinkelverbindung der zwei Elemente ermöglicht das Erreichen einer starken und stabilen Verbindung zwischen dem Basiselement und dem Zahnimplantat, zwischen dem apikalen Element und dem Abutment und zwischen dem basalen Element und dem apikalen Element. Das Verbundwinkelgelenk kann in Prothesen verwendet werden, um eine optimale Ausnutzung der Knochenstruktur des Kiefers zu ermöglichen.

Die EP2647347 betrifft eine prothetische Befestigung mit einem, in einem Zahnimplantat fixierbaren Stützstück und einer mit einer prothetischen Struktur koppelbaren Befestigungsanordnung, Die Befestigungsanordnung umfasst ein Primärelement mit einem im Wesentlichen kugelförmigen Hohlraum und ist mit einem Gewindedurchgangsloch versehen, in das eine Schraube mit einem Kugelkopf eingesetzt ist. Somit kann der kugelförmige Kopf in den inneren Bereich des Verbindungsabschnitts des Trägerstücks eingeführt werden und die Wand, die den im Wesentlichen kugelförmigen Hohlraum des primären Elements bildet, kann eingestellt werden, um den Verbindungsabschnitt des Trägers teilweise und extern zu umgeben, so dass die Montageanordnung drehend gekoppelt ist.

Gemäß der EP2684538 weist eine Schraubenkanal-Richtvorrichtung für eine dentale Superstruktur einen Schraubenkanalteil und ein mit dem Implantat zusammenwirkenden Teil auf. Das proximale Ende des Schraubenkanalteils ist schalenförmig, so dass die innere Bodenfläche eine konkave Form aufweist und die äußere Bodenfläche eine konvexe Form aufweist. Das Schraubenloch des Schraubenelementsitzes ist ein Langloch, und der mit dem Implantat zusammenwirkende Teil umfasst ein unteres Implantat-Kooperationsteil zum Verbinden mit einem Zahnimplantat und einen oberen Implantat-Kooperationsteil. Der untere mit dem Implantat zusammenwirkende Teil weist einen distalen konkaven Sitz auf, und der mit dem oberen Implantat zusammenwirkende Teil weist eine proximale konvexe Bodenfläche mit einem Radius auf, der dem Radius des konkaven Sitzes des unteren Implantat-Kooperationsteils entspricht, um ein erstes Kugelgelenk zu bilden. Der obere mit dem Implantat zusammenwirkende Teil hat einen distalen konkaven Sitz mit einem Radius, der dem Radius der äußeren Bodenfläche des Schraubenkanalteils entspricht, um ein zweites Kugelgelenk zu bilden.

In der EP2835110 ist eine Prothesenbefestigungshalterung beschrieben, die in Winkel und Position frei einstellbar ist und ein Kugelgelenk und eine Kugelgelenkwinkelbegrenzungsabdeckung aufweist.

In der US9320577 ist eine Verbindungsanordnung für ein Zahnimplantatabutment mit einem Anlageabschnitt, der zur Befestigung an einem Zahnimplantat ausgelegt ist, und einem Kugelabschnitt, der einen kugelförmigen Kopf mit einem sich davon erstreckenden Gewindepfosten zum Montieren des Kugelgelenks in einer vom Benutzer wählbaren Gewindebohrung in der Fassung aufweist, um eine am Kugelkopf befestigte integrale Lokalisierungsanbringungskappe zur Befestigung einer Zahnprothese an der Gelenkanordnung richtig auszurichten, beschrieben.

Ein weiteres Befestigungssystem für ein Zahnimplantat mit einem kugelförmigen Abschnitt, wobei das Befestigungssystem einen Körper mit einem einen Hohlraum bildenden Sitz aufweist, ist in der WO2015/152815 beschrieben. Das Befestigungssystem ist dadurch gekennzeichnet, dass der Körper mindestens zwei Teile umfasst, die zusammen den Sitz bilden. Die Teile sind so angeordnet, dass der Sitz den kugelförmigen Abschnitt des Zahnimplantats umgreifen kann und dass der Sitz zwischen einer ersten Position, in der sich die Teile relativ zueinander bewegen können, und einer zweiten Position, in der verhindert wird, dass sich die Teile relativ zueinander bewegen, bewegbar ist.

Die WO2016/170376 beschreibt ebenfalls eine Struktur, die eine kontinuierliche Winkeleinstellung für die Befestigung eines einzelnen Dentalgeräts in einem Implantat ermöglicht.

Nachteilig bei den im Stand der Technik bekannten Systemen sind die mechanische Stabilität und in der Festigkeit nachlassende Positionseinstellungen sowie die aus einer Vielzahl von Einzelteilen bestehenden Konstruktionen.

Der Erfindung liegt daher die Aufgabe zugrunde, den gattungsgemäßen Aufbau eines Implantataufbaus für ein Zahnimplantat dahingehend weiterzubilden, dass mit einfachen Mitteln eine sichere Ausrichtung des Aufbaus und Festlegung der Bauteile des Aufbaues und weiterer Dentalbauteile zueinander erreicht werden kann.

Erfindungsgemäß wird diese Aufgabe dadurch gelöst, dass ein Abutment für einen Dentalbauteil wie einen Zahnersatz bereitgestellt wird, mit
- einer im Wesentlichen zylindrischen Abutmentbasis mit einer am bezogen auf die Anordnung im Kiefer koronalen Ende angeordneten Kugelkopfaufnahme und
- einem im Wesentlichen zylindrischen Befestigungskopf für ein Dentalbauteil., wobei der Befestigungskopf eine zur Längsachse des Befestigungskopfes koaxiale Durchgangsbohrung und einen am bezogen auf die Anordnung im Kiefer apikalen Ende angeordneten Kugelkopf aufweist,
- wobei der Kugelkopf von der Kugelkopfaufnahme, vorzugsweise mindestens kugelkopfhälftig, umfasst und in der Kugelkopfaufnahme, mittels eines Verspannmittels, verspannt festlegbar ist,
- wobei der Kugelkopf zumindest zwei den Kugelkopf unter Ausbildung von Kugelkopfsegmenten zur Durchgangsbohrung durchschneidende Schlitze aufweist, wobei mindestens ein Schlitz in einem Winkel von 0° bis 45°, vorzugsweise 0°, zur Längsachse der Durchgangsbohrung angeordnet ist.

Kugelkopfhälftig im Sinne der vorstehenden Definition bedeutet erfindungsgemäß, dass der am, bezogen auf die Anordnung im Kiefer, apikalen Ende unterhalb des Abschnittes des Befestigungskopfes zur späteren Befestigung des Dentalbauteils wie Zahnersatz, Konuskappe, etc. angeordnete Kugelkopf zumindest kugelhälftig von der Kugelkopfaufnahme umfasst wird. Bei Einsetzen des Kugelkopfes in die Kugelkopfaufnahme wird der Kugelkopf gegen die Schwenköffnung in die Kugelkopfaufnahme gepresst und gleitet aufgrund der Elastizität des Materials in die Kugelkopfaufnahme. In dieser Position kann der Kugelkopf aufgrund seines gegenüber der Schwenköffnung geringfügig größeren Durchmessers auch ohne Verklemmen gegen ein Herausfallen gesichert sein. Das Einbringen des Kugelkopfes in die Aufnahme kann auch dadurch erleichtert werden, dass man den Kugelkopf durch ein sogenanntes Kaltschrumpfen mit Trockeneis oder mit flüssigem Stickstoff thermisch schrumpfen lässt. Der Kugelkopf wird dabei im abgekühlten Zustand in die Kugelkopfaufnahme eingeführt, auf Raumtemperatur gebracht, und ist dann in der Kugelkopfaufnahme zumindest kugelhälftig umfasst. In einem nächsten Schritt kann das Abutment aus Abutmentbasis und Befestigungskopf in das Implantat eingesteckt und mit einer durch die Durchgangsbohrung in dem Befestigungskopf eingebrachten Befestigungsschraube im Implantat verschraubt werden.

Der Befestigungskopf kann in der Kugelkopfaufnahme dadurch verspannt werden, dass durch die Durchgangsbohrung Verspannmittel eingebracht wird/werden, die ein Verklemmen des Kugelkopfes des Befestigungskopfes in der Kugelkopfaufnahme bewirken. Beispielhaft als Verspannmittel sind Splint, Dorn oder bevorzugt eine Verspannschraube genannt, wobei letztere in ein in der Durchgangsbohrung im Befestigungskopf abgeordnetes Innengewinde eingeschraubt werden kann und entweder direkt über Anliegen an der Kugelkopfaufnahme ein Verklemmen bewirkt oder indirekt über ein Auseinanderpressen des apikalen Endes des Kugelkopfes den Kugelkopf gegen die Kugelkopfaufnahme verklemmt.

Der Kugelkopf kann besonders zumindest drei, vier, fünf, sechs, acht oder zehn, vorzugsweise ein Vielfaches von zwei, den Kugelkopf beidseitig zur Durchgangsbohrung unter Ausbildung von beispielsweise keilförmigen Kugelkopfsegmenten durchdringende/durchschneidende Schlitze aufweisen, wobei jeder Schlitz in einem Winkel von 0° zur Längsachse der Durchgangsbohrung angeordnet ist, somit die Achse der Durchgangsbohrung jeweils in einer Ebene mit den durch die Schlitze gebildeten/aufgespannten Ebenen liegt, die zueinander einen Winkel von 360° geteilt durch die Anzahl der Schlitze haben. Erfindungsgemäß erstreckt sich ein Schlitz von der Außenseite des Kugelkopfes bis zur Durchgangsbohrung. Bei einer geraden Anzahl an Schlitzen sind die Schlitze bevorzugt gegenüberliegend in einer Ebene angeordnet und teilen den Kugelkopf in eine der Anzahl der Schlitze entsprechende Anzahl Kugelkopfsegmente, die bei einer Anzahl von vier, sechs, acht oder mehr Schlitzen die Form von keilförmigen Kugelkopfsegmenten in der Anzahl von vier, sechs, acht oder mehr haben.

Dabei sollte die axiale Länge mindestens eines der den Kugelkopf zur Durchgangsbohrung durchschneidenden Schlitze mindestens die Hälfte des axialen Durchmessers des Kugelkopfes betragen. Bevorzugt können die Schlitze im Kugelkopf bis in den Übergangsbereich zum hohlzylindrischen Befestigungskopf, bis zum Gewinde für die Spannschraube ausgebildet sein. Somit kann die axiale Länge des oder der Schlitze etwa dem Durchmesser des Kugelkopfes entsprechen.

Der mindestens eine, den Kugelkopf zur Durchgangsbohrung durchschneidende Schlitz ist vorzugsweise zum apikalen Ende des Kugelkopfes offen, um ein Verklemmen des Kugelkopfes über die Kugelkopfsegmente in der Kugelkopfaufnahme zu erleichtern. Bevorzugt ist der Kugelkopf durch Schlitze in vier, sechs oder acht Kugelkopfsegmente nach Art von Kugelsegmentkeilen unterteilt. Dabei weist der Kugelkopf bevorzugt einen kugelförmigen Hohlraum auf, und die Kugelkopfsegmente haben dann jeweils eine schalenförmige Form.

Insbesondere weist die den Befestigungskopf durchdringende Durchgangsbohrung einen Führungsabschnitt und einen Spannabschnitt und ein an dem, dem Führungsabschnitt zugewandten Ende des Spannabschnittes angeordnetes Innengewinde auf, in das eine Spannschraube einschraubbar ist. Dabei ist die Spannschraube in der Länge und im Durchmesser so bemessen, dass die Spannschraube in der Einschraubposition die Kugelkopfsegmente mit der Kugelkopfaufnahme positionssicher verklemmt.

Die den Kugelkopf durchdringende und im Kugelkopf bevorzugt zu einer Hohlkugel aufgeweitete Durchgangsbohrung kann im Spannabschnitt im Bereich der Schlitze, vorzugsweise unterhalb des größten Durchmesserbereiches, in der Regel in der Mitte der axialen Länge der Schlitze oder unterhalb davon, einen Innenkragen oder Konusrand aufweisen, gegen den sich die Spannschraube beim Einschrauben abstützt und so die Kugelkopfsegmente auseinanderpresst und in der Kugelkopfaufnahme in der Einschraubposition positionssicher verklemmt.

Um das Einbringen des Kugelkopfes in die Kugelkopfaufnahme zu erleichtern, insbesondere bei spröden Materialien, kann die Abutmentbasis an der dem Befestigungskopf zugewandten Schwenköffnung ein Gewinde, vorzugsweise mit nur einen Gewindegang, aufweisen, das mit einem korrespondierenden Gewinde, vorzugsweise mit nur einen Gewindegang, am Kugelkopf des Befestigungskopfes, vorzugsweise im Bereich des größten Durchmesser des Kugelkopfes, beim Einbringen des Befestigungskopfes in die Kugelkopfaufnahme in Eingriff gebracht werden kann. So kann der Kugelkopf mit dem Gewinde in das Gewinde an der Schwenköffnung der Kugelkopfaufnahme eingedreht werden, und nach einer oder mehr Umdrehungen wird der Kugelkopf von der Kugelkopfaufnahme umfasst und ist in der Kugelkopfaufnahme im durch die Schwenköffnung begrenzten Umfang schwenkbar beweglich.

In einer anderen Ausführungsform kann die Abutmentbasis an der dem Befestigungskopf zugewandten Schwenköffnung mindestens eine Nut oder einen Vorsprung aufweisen, die/der mit einem korrespondierenden Vorsprung oder einer korrespondierenden Nut am Kugelkopf des Befestigungskopfes, vorzugsweise im Bereich des größten Durchmesser des Kugelkopfes, beim Einsetzen des Befestigungskopfes in die Kugelkopfaufnahme jeweils nach Art einer Nut-Feder-Verbindung in Eingriff gebracht werden kann. So kann der Kugelkopf mit der Nut oder Feder mit der korrespondierenden Feder oder Nut an der Schwenköffnung der Kugelkopfaufnahme eingeschoben werden, und nach einem kurzen Einschub wird der Kugelkopf von der Kugelkopfaufnahme umfasst und ist in der Kugelkopfaufnahme im durch die Schwenköffnung begrenzten Umfang schwenkbar beweglich.

Zur Verbesserung der Beweglichkeit kann der Stirnrand der Abutmentbasis auch mit einer Fase zur Schwenköffnung versehen sein, wodurch der Schwenkwinkel vergrößert werden kann.

Die Erfindung betrifft auch ein Zahnimplantat mit einem Grundkörper und mit einem Abutment wie zuvor beschrieben und dabei insbesondere ein Zahnimplantat mit einem im Wesentlichen zylindrischen, in eine in einen Kieferknochen eingebrachte Bohrung einsetzbaren Grundkörper mit einer Ringausnehmung und mit einer koaxial zur Ringausnehmung angeordneten Bohrung, die apikal ein Gewinde zur Festlegung einer Halteschraube aufweist, und dem in die Ringausnehmung des Grundkörpers einsetzbaren Abutments, das wie zuvor beschrieben aus Abutmentbasis und Befestigungskopf besteht. Das Abutment kann eine die Abutmentbasis koaxial zur Ringausnehmung durchdringende Bohrung zur Aufnahme einer Halteschraube mit einem apikalen Außengewinde und einem koronalen Schraubenkopf aufweisen oder am apikalen Ende der Abutmentbasis mit einem Außengewinde versehen sein.

Mittels der Halteschraube, die in die Bohrung der Abutmentbasis einsetzbar ist, oder dem apikalen Außengewinde an der Abutmentbasis kann das Abutment in dem Grundkörper festgelegt werden. Dazu ist die Halteschraube mittels eines, in den im Schraubenkopf angeordneten Inbus eingreifenden Inbusschlüssels, der durch die axiale Bohrung des Befestigungskopfes in die Bohrung der Abutmentbasis einführbar und mit dem Inbus-Schraubenkopf in Eingriff bringbar ist, in das am apikalen Ende des Grundkörpers angeordnete Gewinde einschraubbar.

Bei der Ausführungsform des Abutments mit einem an dem apikalen Ende angeordneten Gewinde kann das Abutment beispielsweise über den Eingriff eines Werkzeuges, wie eines Schraubenschlüssels, an außenseitig an der Kugelkopfaufnahme vorgesehenen Schlüsselflächen in den Grundkörper eingeschraubt werden.

Die einander korrespondierenden Abschnitte an Grundkörper und Abutment können in einer Ausführungsform dabei als Rohr-in-Rohr-Abschnitte ausgestaltet sein, die eine Führung und Lagerung des Abutments im Grundkörper ohne Formschlusselemente, auch als Indexierelemente bezeichnet, erlauben. Bei einer solchen Ausführungsform wird das Abutment aus Abutmentbasis und Befestigungskopf über die Abutmentbasis in den Grundkörper eingeführt. Mittels der Halteschraube oder mittels des Gewindes am apikalen Ende wird die Abutmentbasis im Grundkörper gesichert, und der Befestigungskopf wird in die gewünschte Position geschwenkt und mittels der Spannschraube in der Abutmentbasis festgelegt. Am Befestigungskopf kann das Dentalbauteil wie ein Zahnersatz, ein Dentalkonus oder ein Träger für den Zahnersatz über ein Innen- oder Außengewinde am Befestigungskopf angeordnet sein. Der Zahnersatz oder Träger kann auch über ein Gewinde im Schraubenkopf der Spannschraube auf dem Befestigungskopf oder mittels Dentalzement festgelegt werden.

Bei der Ausführungsform der Abutmentbasis mit Halteschraube oder der Ausführungsform der Abutmentbasis mit Gewinde am apikalen Ende können die einander korrespondierenden Abschnitte an Grundkörper und Abutment entweder als Rohr-in-Rohr-Lagerung(en) mit korrespondierenden Durchmessern oder als einander korrespondierende Formschlussabschnitte mit gegebenenfalls weiteren korrespondierenden abgestuft zylindrischen Abschnitten ausgebildet sein.

So können erfindungsgemäß in einer weiteren Ausführungsform der Grundkörper und das Abutment zueinander komplementäre Formschlussabschnitte aufweisen, wobei der Formschlussabschnitt des Grundkörpers und der Formschlussabschnitt an der Abutmentbasis des Abutments bevorzugt zwei bis sechs in der Form zueinander komplementäre Formschlusselementpaare in Form von radial nach innen gerichteten und zur Längsachse des Grundkörpers axialen Federstegen am Grundkörper und korrespondierenden Nuten am Abutment nach Art einer Nut-Feder-Verbindung aufweisen.

Erfindungsgemäß sind am Grundkörper Eindrehelemente, ausgewählt aus Innenmehrkant (bevorzugt Zweikant, Dreikant, Vierkant, Fünfkant, Sechskant), Nocken, Einbuchtungen und Morsekegel-Morsekonus, bevorzugt zwei bis sechs, ausgebildet, die zum Eindrehen des Grundkörpers in den Kiefer mittels eines Eindrehwerkzeuges mit jeweils komplementären Eindrehelementen wie Außenmehrkant (bevorzugt Zweikant, Dreikant, Vierkant, Fünfkant, Sechskant), Einbuchtungen, Nocken und Morsekegel-Morsekonus am Eindrehwerkzeug in Eingriff gebracht werden.

Bei diesen Ausführungsformen sind an der Abutmentbasis keine zu den Eindrehelementen am Grundkörper komplementären Eindrehelemente angeordnet, und bevorzugt sind die Formschlußelemente, auch Indexierelemente genannt, an der Abutmentbasis so angeordnet, daß sie keinen Kontakt zu den Eindrehelementen am Grundkörper haben und von den Eindrehelementen getrennt ausgebildet sind. Diese Ausführungsform ist ausgelegt, daß die Krafteinwirkung beim Eindrehen des Grundkörpers in den Kiefer mit Hilfe des Eindrehwerkzeuges ausschließlich über die Eindrehelemente und zusätzlich, falls gewünscht, über die Anlage des Eindrehelementes an der Seitenfläche und/oder Wurzel des in Eindreh- oder Ausdrehrichtung zugeordneten Federsteges erfolgt.

Bevorzugt ist jeweils zwischen zwei benachbarten Eindrehelementen am Grundkörper ein Formschlusselement einer Federsteg-Nut-Verbindung angeordnet. So kann bei zwei bis sechs in der Form zueinander komplementären Formschlusselementen in Form von radial nach innen gerichteten und zur Längsachse des Grundkörpers axialen Federstegen am Grundkörper zwischen zwei benachbarten Formschlusselementen ein Eindrehelement am Grundkörper angeordnet sein.

Wenn in einer anderen Ausführungsform der Grundkörper mittels Krafteinwirkung über das Abutment mit Hilfe eines an Schlüsselflächen am Abutment/Befestigungskopf angreifenden Eindrehwerkzeuges in den Kiefer eingedreht werden soll, können bei dem erfindungsgemäßen Zahnimplantat der Formschlussabschnitt des Grundkörpers und der Formschlussabschnitt der Abutmentbasis zueinander komplementäre Eindrehelemente, die beim Einsetzen der Abutmentbasis in den Grundkörper miteinander in Eingriff gebracht werden, aufweisen, wobei der Grundkörper und die Abutmentbasis in Eingriffsposition der zueinander komplementären Eindrehelemente zueinander drehfest festgelegt sind, und wobei die zueinander komplementären Eindrehelemente an Grundkörper und Abutmentbasis bevorzugt als jeweils formkomplementäre Eindrehelementpaare, ausgewählt aus Paaren von Innenkant-Außenkant (bevorzugt), Nocken-Einbuchtungen und Morsekegel-Morsekonus, ausgebildet sind.

Insbesondere kann bei dem erfindungsgemäßen Zahnimplantat die Ringausnehmung des Grundkörpers einen apikalen Führungsabschnitt, einen koronal zu dem apikalen Führungsabschnitt angeordneten Formschlussabschnitt und einen koronal zu dem Formschlussabschnitt angeordneten koronalen Endabschnitt umfassen, und die Abutmentbasis kann dann korrespondierend einen apikalen Führungsabschnitt, einen Formschlussabschnitt und einen koronalen Endabschnitt, die mit den entsprechenden Abschnitten des Grundkörpers korrespondieren, umfassen

In den erfindungsgemäßen Ausführungsformen ist bei Verwendung einer Halteschraube der Schraubenkopf der Halteschraube in der Gebrauchsposition in der Abutmentbasis bevorzugt so versenkt, daß eine Schwenkbewegung des Befestigungskopfes in der Schwenköffnung der Abutmentbasis nicht beeinträchtigt ist.

Bei Verwendung des erfindungsgemäßen Abutments mit Abutmentbasis mit Kugelkopfaufnahme und mit Befestigungskopf mit apikalem Kugelkopf ist die Verwendung einer Indexierung zwischen Grundkörper und Abutment zur Ausrichtung des Befestigungskopfes nicht unbedingt erforderlich, da die gewünschte, zumeist senkrechte Ausrichtung des Befestigungskopfes in der Mundhöhle des Patienten nach Festlegung der Abutmentbasis in jeder Richtung innerhalb der Schwenköffnung erfolgen kann.

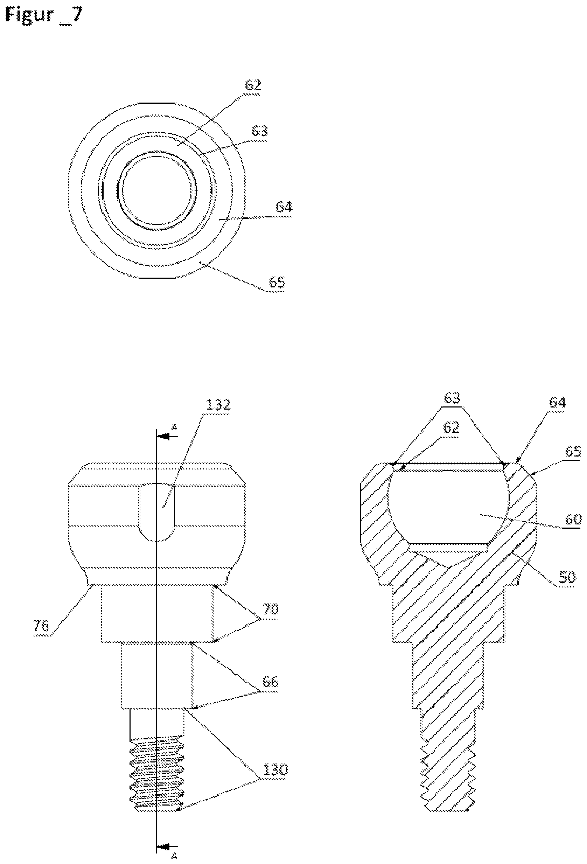

In weiteren Ausführungsformen der Erfindung, die insbesondere in den Figuren 7 bis 10 dargestellt sind, sind weitere Formen von Implantat und Abutment erfasst. So betrifft die Erfindung auch Zahnimplantate, bei denen die Abutmentbasis nach Art einer Rohr-in-Rohr-Lagerung, optional mit mindestens zwei zu korrespondierenden Abschnitten des Grundkörpers nahezu äquiradialen Abschnitten, in der Ringausnehmung des Grundkörpers drehbar gelagert ist, und solche Zahnimplantate, bei denen der Grundkörper und die Abutmentbasis einstückig ausgebildet sind.

Die Bauteile des erfindungsgemäßes Abutments oder des Grundkörpers können durch mechanische Bearbeitung aus Rohlingen über CNC-Verfahren oder durch Laser-Verfahren hergestellt werden. Dazu gehören strukturabtragende Verfahren wie auch strukturaufbauende Verfahren, die jeweils von der Beaufschlagung des Rohlings, oder von Pulver, mit energiereicher Strahlung Gebrauch machen.

Als strukturabtragendes Verfahren kann Laserabtragen erfindungsgemäß sehr selektiv eingesetzt werden, um einzelne Schichten vom Rohling/Substrat ohne signifikante Beschädigung der darunterliegenden Schichten oder des Substrats zu entfernen. Die abgetragenen Strukturen können sowohl punkt- oder linienförmig sowie flächig ausgestaltet sein.

Als struktur- oder schicht-aufbauende Verfahren zur Herstellung von dreidimensionalen Gegenständen wie Implantaten sind erfindungsgemäß zu nennen: Rapid Prototyping, Rapid Tooling, Rapid Manufacturing, Lasersintern, und EBM.

Weiterhin kann als ein Verfahren zur Erzeugung von Mikrostrukturen auf der Implantatoberfläche das Lasermikrosintern oder ein abtragendes Verfahren verwendet werden. Dabei ist auch die Verarbeitung keramischer Pulver in hoher Qualität möglich.

Grundvoraussetzung für die Verfahren ist in der Regel, dass die Geometriedaten des Produktes dreidimensional vorliegen und als Schichtdaten verarbeitbar sind. Aus den vorliegenden CAD-Daten des Bauteils überführt man erfindungsgemäß die Daten in ein Datenformat, beispielsweise ein STL-Format, um die Oberfläche eines Rohlings mittels der vorgenannten Verfahren gezielt strukturieren oder den Rohling strukturiert aus Pulver aufbauen zu können.

Die bekannten Vorrichtungen, auch für Rapid-Prototyping-Verfahren, besitzen jeweils eine solche Daten-Schnittstelle, die zur Bereitstellung geometrischer Information aus dreidimensionalen Datenmodellen dient.

Seitens der Erfinder hier wurde ein Verfahren vorgeschlagen, bei dem sich mit regelmäßigen/periodisch wiederholenden Mikrostrukturen versehene Oberflächen dadurch erzeugen lassen, dass man die Oberfläche des Rohlings mit energiereicher Strahlung in einem oder mehreren Mustern beaufschlagt, das aus einer in einen STL-Datensatz überführten periodischen Funktion darstellbar ist, wobei ein strukturabtragendes Verfahren eingesetzt wird. Alternativ kann ein mit regelmäßigen/periodisch wiederholenden Mikrostrukturen versehener Rohling über ein strukturaufbauendes Verfahren hergestellt werden. Bei einem solchen strukturaufbauenden Verfahren kann eine auf einem Rohling als Träger vorhandene Pulvermenge in einem oder in der Regel mehreren Schritten mit der energiereichen Strahlung in einem oder mehreren Mustern, das aus einer in einen STL-Datensatz überführten periodischen Funktion darstellbar ist, beaufschlagt werden und auf dem Rohling der Aufbau mit dem Muster erzeugt werden.

Als weniger aufwändige Alternative bietet sich ein strukturabtragendes Verfahren an, bei dem unter Abtragen von Oberflächenmaterial die gewünschte Struktur erzeugt wird.

Der erhaltene Rohling, der durch aufbauende oder abtragende Verfahren mit einer regelmäßig mikrostrukturierten Oberfläche versehen wurde, kann auch einer Behandlung zur Erzeugung einer zweiten regelmäßigen Mikrostruktur unter Verwendung einer aus einer in einen STL-Datensatz überführten periodischen Funktion und/oder einer nasschemischen Behandlung zur Erzeugung einer Nanostruktur unterzogen werden.

Das Material des Abutments oder des Implantats kann ausgewählt werden aus der Gruppe der Metalle, der metallischen Legierungen, keramischer Materialien (z.B. Zirkonoxid), Gläsern und Polymeren (z.B. PEEK, Polyetheretherketone) sowie Kombinationen davon.

Dabei besteht das Abutment und/oder das Implantat bevorzugt aus einem Material, das aus der Gruppe der Metalle, der metallischen Legierungen und Kombinationen davon mit keramischen Materialien ausgewählt wird. Bevorzugt besteht das eingesetzte Implantatmaterial aus metallischen Materialien wie Reintitan oder metallischen Titanlegierungen, Chrom/Nickel/Aluminium/ Vanadium/Kobalt-Legierungen (z.B. TiAIV4, TiAlFe2,5), Edelstählen (z.B. V2A, V4A, Chrom-Nickel 316L) oder aus einer Kombination davon mit keramischen Materialien wie Hydroxylapatit, Zirkonoxid, Aluminiumoxid, bei der das metallische Material als Verbundmaterial mit keramischem Material vorliegt. Die nichtmetallischen Materialien einschließlich der Polymere wie PEEK können aber auch allein ohne Kombination mit anderen Materialien eingesetzt werden.

Es kann von besonderem Vorteil sein, wenn die Abutmentbasis aus einem Material, das aus der Gruppe der Metalle, der metallischen Legierungen und Kombinationen davon mit keramischen Materialien ausgewählt wird, besteht und der Befestigungskopf zumindest teilweise aus einem Polymermaterial wie PEEK besteht. Bei dieser Ausführung ist eine Flexibilität des Materials, insbesondere des Polymermaterials des Befestigungskopfes sowohl beim Einsetzen des Befestigungskopfes in die Abutmentbasis als auch beim Verklemmen/Verspannen des Befestigungskopfes in der Kugelkopfaufnahme der Abutmentbasis von Vorteil. Zum einen lässt sich der Kugelkopf leichter in die Kugelkopfaufnahme der Abutmentbasis einschieben, zum anderen leichter darin mittels einer Spannschraube positionssicher verklemmen. Nach Einbringen des Implantates in den Kiefer und nach dem in der Regel lotrechten Ausrichten des danach in das Implantat eingesetzten Abutments kann das Dentalbauteil, das auf den Befestigungskopf angeordnet werden soll, beispielsweise mittels Dentalzement, mit der Abutmentbasis verbunden werden und so eine belastbare und feste Verbindung über das Abutment zum Grundkörper ergeben.

Nachstehend sind Ausführungsbeispiele des erfindungsgemäßen Abutments und seiner Bauteile sowie des erfindungsgemäßen Einzelzahnimplantates anhand der schematischen Zeichnungen im Einzelnen erläutert. Dabei zeigt:
Fig. 1 ein Ausführungsbeispiel eines Einzelzahnimplantates mit einem erfindungsgemäßen Abutment im axialen Längsschnitt, sowie in einer perspektivischen Draufsicht von oben auf das Einzelzahnimplantat.
Fig. 2 ein Ausführungsbeispiel eines im erfindungsgemäßen Zahnimplantat wie in Fig. 1 gezeigt verwendeten Implantat-Grundkörpers im axialen Längsschnitt A-A entlang der in der Draufsicht rechts gezeigten Ebene, sowie jeweils eine Draufsicht von unten (unterhalb) und von oben auf den Grundkörper (oberhalb);
Fig. 3 ein Ausführungsbeispiel einer im erfindungsgemäßen Zahnimplantat wie in Fig. 1 gezeigt verwendeten Abutmentbasis im axialen Längsschnitt A-A entlang der in der Draufsicht links gezeigten Ebene rechts, sowie jeweils eine Draufsicht von oben (oberhalb) auf die Abutmentbasis und eine Draufsicht auf die Abutmentbasis von unten (unterhalb);
Fig. 4 ein Ausführungsbeispiel eines im erfindungsgemäßen Zahnimplantat wie in Fig. 1 gezeigt verwendeten Befestigungskopfes im axialen Längsschnitt A-A entlang der in der Draufsicht links gezeigten Ebene, sowie eine Draufsicht von unten (oberhalb) auf den Befestigungskopf;
Fig. 5 ein Ausführungsbeispiel einer im erfindungsgemäßen Zahnimplantat wie in Fig. 1 gezeigt verwendeten Spannschraube im axialen Längsschnitt A-A entlang der in der Draufsicht links gezeigten Ebene, sowie eine Draufsicht von oben (unterhalb) auf die Spannschraube;
Fig. 6 ein Ausführungsbeispiel einer im erfindungsgemäßen Zahnimplantat wie in Fig. 1 gezeigt verwendeten Halteschraube im axialen Längsschnitt A-A entlang der in der Draufsicht rechts gezeigten Ebene, sowie eine Draufsicht von oben (unterhalb) auf die Halteschraube.
Fig. 7 ein weiteres Ausführungsbeispiel einer im erfindungsgemäßen Zahnimplantat wie in Fig. 1 gezeigt verwendeten Abutmentbasis im axialen Längsschnitt A-A entlang der in der Draufsicht links gezeigten Ebene, sowie eine Draufsicht von oben (oberhalb) auf die Abutmentbasis;
Fig. 8 ein weiteres Ausführungsbeispiel einer im erfindungsgemäßen Zahnimplantat wie in Fig. 1 gezeigt verwendeten Abutmentbasis im axialen Längsschnitt A-A entlang der in der Draufsicht links gezeigten Ebene, sowie jeweils eine Draufsicht von oben (oberhalb) auf die Abutmentbasis;
Fig. 9 ein weiteres Ausführungsbeispiel einer im erfindungsgemäßen Zahnimplantat wie in Fig. 1 gezeigt verwendeten Abutmentbasis im axialen Längsschnitt A-A entlang der in der Draufsicht links gezeigten Ebene, sowie jeweils eine Draufsicht von oben (oberhalb) auf die Abutmentbasis;
Fig. 10 ein Ausführungsbeispiel einer einstückigen Ausführungsform eines Implantatgrundkörpers und einer Abutmentbasis im axialen Längsschnitt A-A entlang der in der Draufsicht links gezeigten Ebene rechts, sowie jeweils eine Draufsicht von oben (oberhalb) und eine Draufsicht von unten auf den Grundkörper.

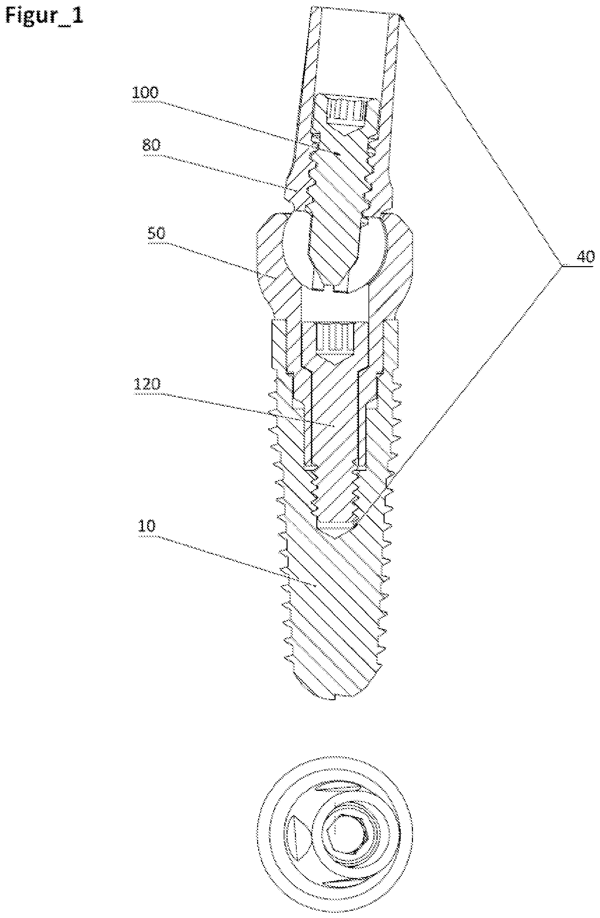

Figur 1 zeigt den Implantatgrundkörper 10, sowie ein in die Ringausnehmung des Grundkörpers 10 eingesetztes und über die Halteschraube 120 festgelegtes Abutment 40 mit der Abutmentbasis 50 und dem Befestigungskopf 80, die gegeneinander über die Spannschraube 100 in der Position fixiert sind.

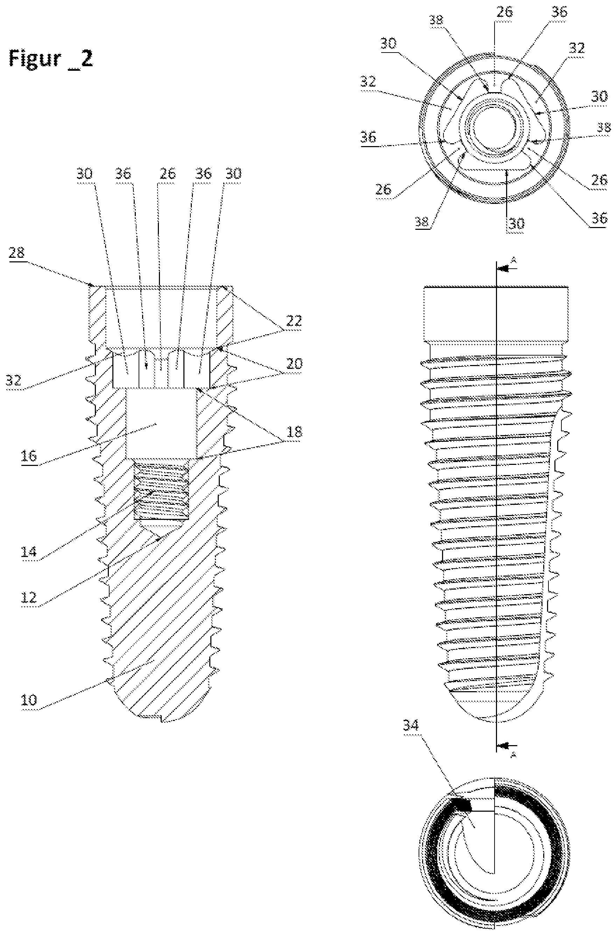

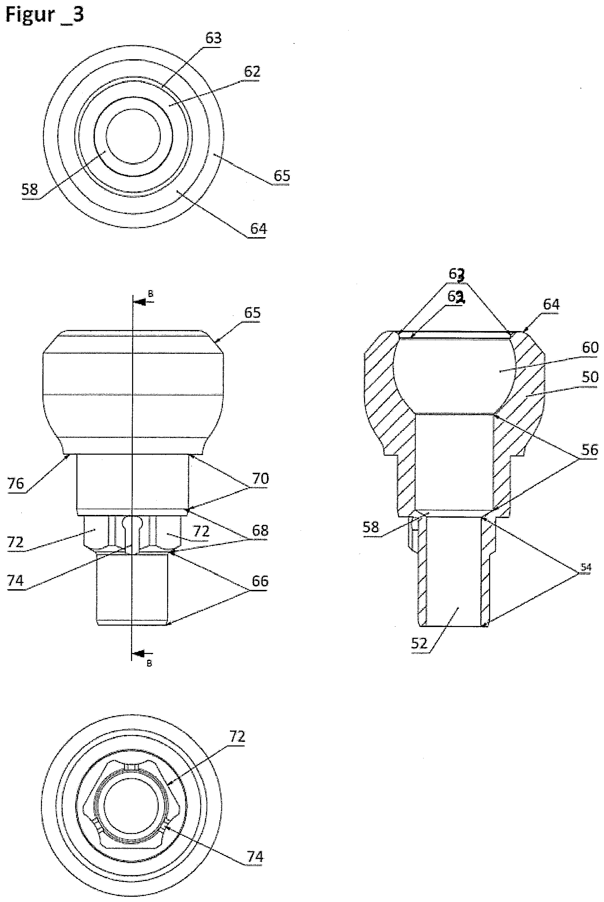

Wie in Fig. 2 gezeigt, ist der Grundkörper 10 an seinem in Fig. 1 unten gezeigten apikalen Ende geschlossen ausgebildet und weist eine zu seinem in Fig. 1 oben liegenden koronalen Ende hin offene Blindbohrung 12 mit einem Innengewinde 14 am apikalen Ende der Blindbohrung 12 auf. In das Innengewinde ist eine in Fig. 2 zeichnerisch nicht dargestellte Halteschraube 120 für die Abutmentbasis 50 einschraubbar. An das Innengewinde 14 des Grundkörpers 10 schließt in koronaler Richtung eine hohlzylindrische Ringausnehmung 16 mit gegenüber der Bohrung 12 vergrößertem Innendurchmesser an. Die Ringausnehmung 16 weist in der dargestellten Form drei Bereiche 18; 20; 22 auf. Dabei weist die Ringausnehmung 16 gemäß Figur 2 einen an das Innengewinde 14 koronal anschließenden Führungsabschnitt 18 auf. An den Führungsabschnitt 18 der Ringausnehmung 16 schließt sich in koronaler Richtung ein Formschlussabschnitt 20 an, der einen gegenüber dem Führungsabschnitt 18 vergrößerten Innendurchmesser hat und eine zumindest abschnittsweise konische Innenwandung 32 mit - in der Ausführungsform gemäß Figur 2 - drei radial nach innen gerichteten Federstegen 26 aufweisen kann. Die Federstege 26 sind zu den Nuten 74 an der in Figur 3 gezeigten Abutmentbasis 50 nach Art einer Nut-Feder-Verbindung korrespondierend ausgebildet und können vorzugsweise derart bemessen sein, dass sie sich über die gesamte axiale Länge des Formschlussabschnittes 20 erstrecken. Die Federstege 26 können durch maschinelle mechanische oder elektrochemische Bearbeitung aus dem Grundkörper ausgebildet sein.

In dem Formschlussabschnitt 20 kann gemäß Fig. 2 zwischen je zwei Federstegen 26 je eine Innenkantfläche 30 als Eindrehelement vorgesehen sein, an der jeweils eine korrespondierende, formkomplementäre Außenkantfläche eines nicht dargestellten Eindrehwerkzeuges oder, falls so ausgeführt, eine korrespondierende, formkomplementäre Außenkantfläche eines wie des in Fig. 3 gezeigten Abutments 40 als Eindrehelement während des Eindrehvorganges des Grundkörpers 10 in den Kiefer anliegen kann. So können an der Abutmentbasis ein oder mehrere als Außenkantfläche 72 gestaltete Eindrehelemente jeweils so ausgebildet sein, dass die Planfläche der Außenkantfläche, die auch radial vorspringend ausgebildet sein kann, zumindest in Eindrehrichtung mit einer Seitenfläche des Federsteges, nicht jedoch an der Spitze des Federsteges zur Anlage kommen kann und so die Übertragung des Drehmomentes auf den Grundkörper unterstützen kann, ohne dass die Stegspitze beim Eindrehen beschädigt werden kann. Eine solche Wechselwirkung/Abstützung/Anschlag zwischen Federstegwurzel und Nutkante kann bei jedem bei dem erfindungsgemäßen Zahnimplantat verwendeten Eindrehelementpaar gegeben sein, um die Übertragung des Drehmomentes in Drehrichtung zu unterstützen, wenn zwischen zwei Eindrehelementpaaren radiale Federstege/Nuten angeordnet sind.

Aus mechanischen und geometrischen Gründen ist die Verwendung von drei Eindrehelementen wie beispielsweise Innenkantflächen am Grundkörper 10 vorteilhaft, es können jedoch auch zwei bis sechs Eindrehelemente wie Innenkantflächen vorgesehen sein. An den Innenkantflächen können korrespondierende Außenkantflächen eines nicht dargestellten Eindrehwerkzeuges oder Außenkantflächen 72 der Abutmentbasis 50 als Eindrehelemente eingreifen, solange beim Einsetzen der Abutmentbasis 50 die Formschlusselemente an Grundkörper 10 und Abutmentbasis 50 zuverlässig in Eingriff gebracht werden können. Zwischen den Innenkantflächen können bei den Ausführungsformen gemäß der Erfindung jeweils Vorsprünge wie Federstege 26 in entsprechender Anzahl vorgesehen sein, wobei die Federstege und die Innenkantflächen sich aus Gründen einer verbesserten Kraftübertragung oder Indexierung axial über die gesamte axiale Länge des Formschlussabschnittes erstrecken können und über die formkomplementären Außenkantflächen des Eindrehwerkzeuges oder auch der Abutmentbasis die Drehmomentübertragung ermöglichen.

Fig. 3 zeigt die im Wesentlichen zylindrische Abutmentbasis 50 mit einer Durchgangsbohrung 52 mit dem Führungsabschnitt 54 und dem Aufnahmeabschnitt 56 für die Spannschraube 100, die im eingeschraubten Zustand an dem Konusbund 58 zur Anlage kommt. Im oberen Bereich, dem koronalen Ende zugewandt, ist die Kugelkopfaufnahme 60 mit der gegenüber dem maximalen Durchmesser der Kugelkopfaufnahme verringerten Durchmesser der Schwenköffnung 62 angeordnet. An der koronalen Stirnseite ist eine umlaufende Stirnfläche 64 vorgesehen, die zur Kugelkopfaufnahme 60 und Schwenköffnung 62 eine umlaufende Fase 63 aufweist, die ein Verschwenken des Befestigungskopfes 80 in der Kugelkopfaufnahme 60 erleichtert.

Bei Einschrauben der Halteschraube 120 in das am apikalen Ende des Grundkörpers vorgesehene Gewinde 14 kommt der Schraubenkopf 126 am Konusbund 58 zur Anlage. Der Schraubenkopf ist dabei so bemessen, dass er ein freies Verschwenken des in der Kugelkopfaufnahme 60 angeordneten Kugelkopfes 82 ermöglicht.

An der Stirnfläche 64 kann das nicht dargestellte Dentalbauteil in Form einer Krone oder einer Halterung für eine Prothese zur Anlage kommen. Um einen sicheren Sitz der Abutmentbasis 50 in dem Grundkörper 10 zu gewährleisten, sind gemäß Fig. 3 außenseitig an der Abutmentbasis 50 ein Führungsabschnitt 66, ein Formschlussabschnitt 68 sowie ein Endabschnitt 70 vorgesehen. Der Führungsabschnitt dient dem Führen beim Einsetzen der Abutmentbasis 50 in den Grundkörper 10. Im Formschlussabschnitt sind Formschlusselemente wie Nuten, die dem Eingriff entsprechender Federstege am Grundkörper und der Indexierung dienen, angeordnet, und falls gewünscht auch Eindrehelemente bevorzugt in Form von Außenmehrkantflächen vorgesehen, die zwischen den Formschlusselementen bevorzugt abwechselnd angeordnet sein können. Ergänzend können beispielsweise außenseitig an der Kugelkopfaufnahme Indexierungen vorgesehen sein, die die Lage der Nut bzw. des Federsteges im apikalen Ende der Abutmentbasis anzeigen.

Die Abutmentbasis 50 kann nach Eindrehen des Grundkörpers in den Kiefer in den Grundkörper eingesetzt werden und ist über die Formschlussnuten, als auch, falls vorhanden, über die Mehrkantflächenpaare in Grundkörper und Abutment gegen ein Verdrehen gesichert.

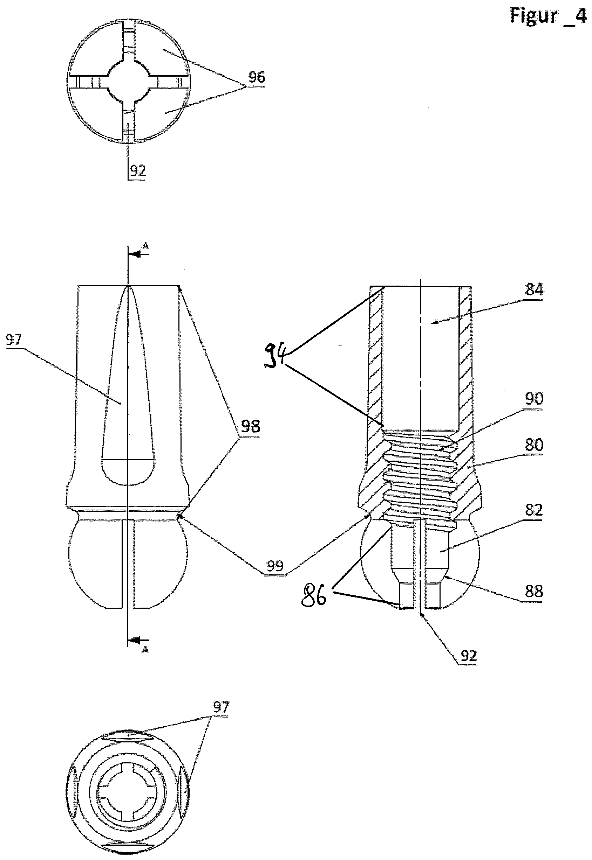

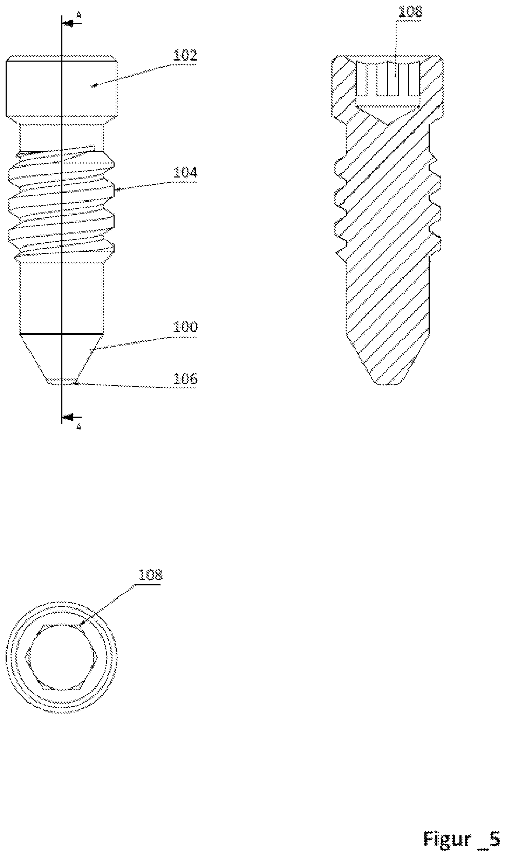

Der in Fig. 4 gezeigte Befestigungskopf 80 weist eine Durchgangsbohrung 84, einen Befestigungsabschnitt 98 für den Zahnersatz und einen apikal vom Befestigungsabschnitt 98 angeordneten Kugelkopf 82 auf, der zum Einsetzen in die Kugelkopfaufnahme 60 der Abutmentbasis 50 vorgesehen ist. Die Durchgangsbohrung weist koronal einen Führungsabschnitt 94 und apikal den Spannabschnitt 86 auf, wobei die in Fig. 5 gezeigte Spannschraube 100 nach dem Einsetzen des Befestigungskopfes 80 in die Kugelkopfaufnahme 60 in die Abutmentbasis 50 in den Führungsabschnitt eingesetzt wird und in das Gewinde 90 des Spannabschnittes eingeschraubt wird. Bei Anlage der Schraubenspitze 106 an dem Innenkragen 88, der auch als Hohlkugelabschnitt im Kugelkopf 82 ausgebildet sein kann, werden bei weiterem Einschrauben der Spannschraube 100 die vier in Fig. 4 in der Teilzeichnung links oben in der Draufsicht von unten gezeigten Kugelkopfsegmente 96 auseinandergedrückt und verklemmen den Kugelkopf 82 in der gewünschten Position in der Kugelkopfaufnahme 60 der Abutmentbasis 50. Erfindungsgemäß sind auch mehr oder weniger Kugelkopfsegmente 96 möglich, wobei aus Fertigungsgründen ein Vielfaches von Zwei wie zwei, vier, sechs oder acht Kugelkopfsegmente 96 vorteilhaft sind.

Wie in Fig. 5 gezeigt, ist die Spannschraube 100 in der Länge und im Durchmesser dabei so bemessen sein, dass die Spannschraube 100 in der Einschraubposition in dem Befestigungskopf 80 gemäß Fig. 4 mit ihrer Schraubenspitze 106 gegen einen Innenkragen 88 der umlaufend in der Durchgangsbohrung 84 bevorzugt von der axialen Mitte des Kugelkopfes 82 bis zum apikalen Ende des Kugelkopfes 82 angeordnet sein kann, anliegt und die durch die Schlitze 92 gebildeten Kugelkopfsegmente 96 auseinander drückt und gegen die Wände der Kugelkopfaufnahme 60 presst und so verklemmt.

Obwohl es möglich ist, dass die axial zur Längsachse der Durchgangsbohrung 84 angeordneten Schlitze 92 nicht bis zum apikalen Ende des Kugelkopfes, bzw. des Befestigungskopfes geschlitzt sind und apikal Verbindungsstege zwischen den Segmenten 96 vorhanden sind, ist bevorzugt, dass die Schlitze bis zum apikalen Ende des Spannabschnittes 86 reichen und eine federnde Radialbewegung der Kugelkopfsegmente 96 erlauben. So ist auch ein Abziehen des Befestigungskopfes nach Ausschrauben der Spannschraube 100 erleichtert. Der Kugelkopf 82 kann vorzugsweise um die axiale Durchgangsbohrung 84 oberhalb des Innenkragen 88 und, falls erforderlich, auch unterhalb des Innenkragen 88 eine verringerte Wandstärke - nach Art einer "Aushöhlung" - aufweisen, die ein Aufspreizen der Kugelkopfsegmente 96 bei Anlage der Schraubenspitze 106 am Innenkragen 88 beim Eindrehen und ein Zurückfedern der Kugelkopfsegmente 96 bei Entfernung der Spannschraube 100 ermöglicht.

Obgleich in der einfachsten Ausführungsform bereits ein diametraler Schlitz, somit zwei bis zur axialen Längsachse der Durchgangsbohrung reichende Schlitze (Teilschlitze) zum Verklemmen ausreichen, ist es bevorzugt, dass zumindest drei, bevorzugter vier oder mehr Schlitze, besonders ein Vielfaches von zwei Schlitzen, die vorzugsweise jeweils bis zur Längsachse des Befestigungskopfes durchgehend ausgerichtet sein können, ausgebildet sind. Somit ergeben sich in Draufsicht vom apikalen Ende her auf den Kugelkopf die durch die Schlitze voneinander getrennten keilförmigen Kugelkopfsegmente 96, die an ihrem koronalen Ende über eine Kugelkopfbasis, die die einzelnen etwa keilförmigen Kugelkopfsegmente 96 verbindet, verbunden sind. Im Bereich der Kugelkopfsegmente kann beispielsweise auch im Bereich des größtmöglichen Durchmessers des Kugelkopfes in der Durchgangsbohrung ein umlaufender Innenkragen vorgesehen sein, gegen den die Schraubenspitze 106 der Spannschraube 100 beim Einschrauben der Schraube in das Innengewinde 90 des Befestigungskopfes unter Anpressdruck anliegt und die Kugelkopfsegmente in der Einschraubposition auseinander drückt.

Fig. 5 zeigt die Spannschraube 100 mit dem Schraubenkopf 102 benachbarten Außengewinde 104 und der Schraubenspitze 106 zur Anlage an den Innenkragen 88 des Befestigungskopfes 80. Zum Einschrauben der Spannschraube kann ein Innensechskant oder Innensechsrund 108 dienen.

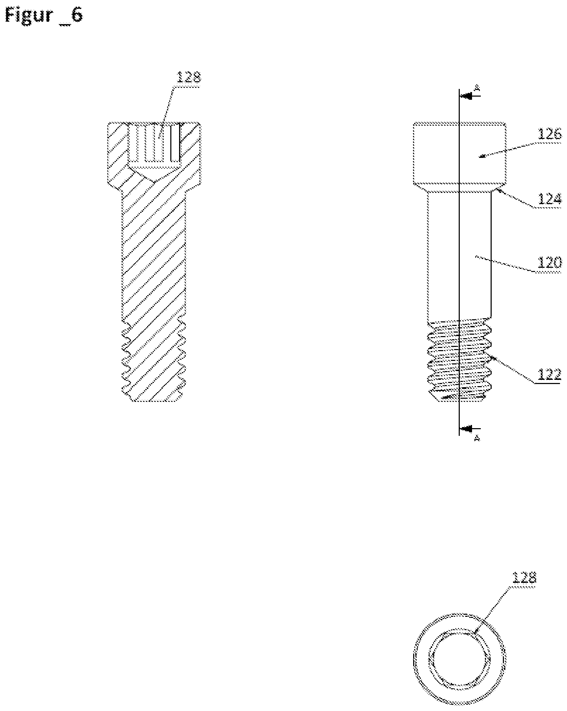

Die in Fig. 6 gezeigte Halteschraube für die Befestigung der Abutmentbasis im Grundkörper 10 weist einen Schraubenkopf 126 und einen Konusbund 124 auf, wobei das Außengewinde 122 am apikalen Ende der Halteschraube 120 angeordnet ist. Das Eindrehen der Halteschraube kann ebenso wie bei der in Fig. 5 gezeigten Spannschraube über ein im Schraubenkopf angeordneten Innensechskant (128) oder Innensechsrund erfolgen.

Die in den Figuren 7 bis 9 gezeigten Ausführungsformen der Abutmentbasis 50 stellen Varianten der in Figur 3 gezeigten Ausführungsform der Abutmentbasis 50 ohne die in Figur. 3 im Formschlussabschnitt 68 angeordneten Formschlusselemente 72 dar. Dementsprechend weisen die den Abschnitten der Abutmentbasis komplementären Abschnitte der Ringausnehmung 16 des Grundkörpers 10 bei den zeichnerisch nicht dargestellten Ausführungsformen des Grundkörpers 10, die den in den Figuren 7 bis 9 gezeigten Ausführungsformen der Abutmentbasis 50 korrespondieren, ebenfalls keine Formschlusselemente 26 und keine Eindrehelemente 30 auf, sondern anstelle der Eindrehelemente 30 außenseitig an dem Endabschnitt 22 Schlüsselflächen ähnlich den Schlüsselflächen 132 an der in Figur 7 gezeigten Abutmentbasis 50.

So zeigt Fig. 7 eine Abutmentbasis 50 mit einem zum Grundkörper 10 apikalen Ende angeordneten Gewindeabschnitt, der in den entsprechenden Gewindeabschnitt 14 im Grundkörper 10 einschraubbar ist. Wie oben ausgeführt, sind die für die Ausführungsformen gemäß den Figuren 7 bis 9 verwendbaren Grundkörper 10 zeichnerisch nicht dargestellt, und die in den Figuren 7 bis 9 dargestellten Abschnitte der Abutmentbasis 50 haben korrespondierende Abschnitte in den Grundkörpern 10, jedoch jeweils ohne entsprechenden Formschlussabschnitt 68. Die in Figur 7 gezeigte Abutmentbasis 50 weist einen Gewindeabschnitt 130, sowie einen Führungsabschnitt 66 und einen Endabschnitt 70 auf, denen entsprechende Abschnitte am Grundkörper 10 korrespondieren. Die Abschnitte 66 und 70 sind als zylindrische Abschnitte ausgeführt, und die Abutmentbasis 50 wird mittels eines an den Schlüsselflächen 132 angreifenden Werkzeuges in den Grundkörper 10 geschraubt, so dass der Ringbund 76 am Stirnrand 28 des Grundkörpers 10 zur Anlage kommt. Dabei sind die axialen Längen der Abschnitte 70, 66 und 130 so bemessen, dass beim Eindrehen der Abutmentbasis 50 in den Grundkörper 10 über die Schlüsselflächen 132 oder über einen unterhalb der Kugelkopfaufnahme 60 innen, in der Zeichnung nicht dargestellten Inbus, die Stirnfläche 28 und der Ringbund 76 dichtend zur Anlage kommen. Das Eindrehen der Abutmentbasis 50 über einen unterhalb der Kugelkopfaufnahme 60 angeordneten Inbus, der in der Zeichnung nicht dargestellt ist, hat den Vorteil, dass die Abutmentbasis 50 und Befestigungskopf 80 bereits vor dem Einschrauben zusammengesetzt werden können und dann über einen durch den Befestigungskopf eingeführten Inbusschlüssel die Abutmentbasis 50 in dem Grundkörper 10 verschraubt werden kann. Diese Festlegung entspricht der Festlegung der Abutmentbasis 50 mittels der Befestigungsschraube 120 bei der in Figur 3 gezeigten Ausführungsform. Wenn die in Figur 7 gezeigte Abutmentbasis 50 mittels der Schlüsselflächen in den Grundkörper 10 eingeschraubt wird und der Befestigungskopf 80 nach dem Einschrauben der Abutmentbasis 50 in den Grundkörper 10 eingesetzt ist, ist der Befestigungskopf so bemessen und/oder aus einem Material gefertigt, dass ein Einsetzen des Befestigungskopfes 80 in die Kugelkopfaufnahme 60 ohne eine thermische Behandlung wie Kalkschrumpfen möglich ist.

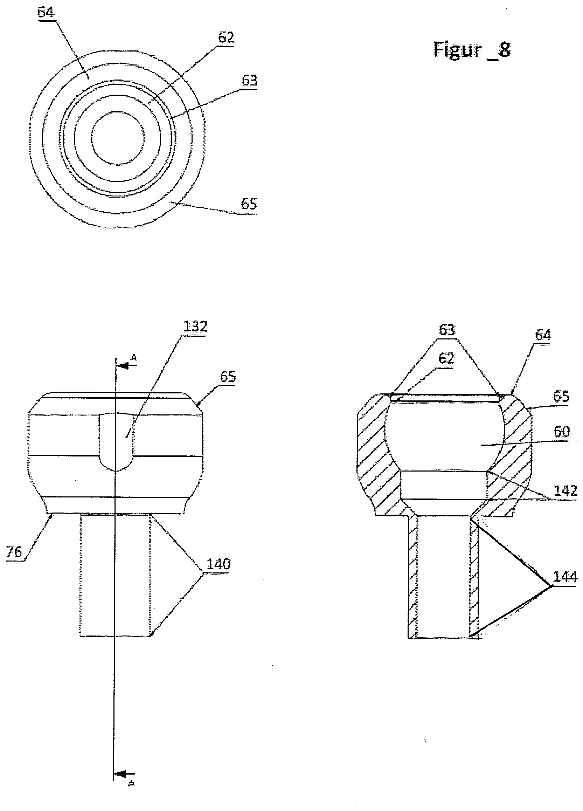

In Figur 8 ist eine weitere Ausführungsform der erfindungsgemäßen Abutmentbasis 50 dargestellt, die anstelle der in Figur 3 gezeigten Abutmentbasis 50 mit Führungsabschnitt 18, Formschlussabschnitt 20 und Endabschnitt 22 lediglich einen hohlzylindrischen Rohrabschnitt 140 aufweist, der in einem korrespondierenden Rohrabschnitt eines zeichnerisch nicht dargestellten Grundkörpers 10 eingesteckt und über eine Halteschraube 120, die in das apikal angeordnete Gewinde im Grundkörper 10 eingeschraubt wird und dabei über den hohlzylindrischen Führungsabschnitt 140 geführt mit dem Schraubenkopf in dem Aufnahmeabschnitt 142 zur Anlage kommt.

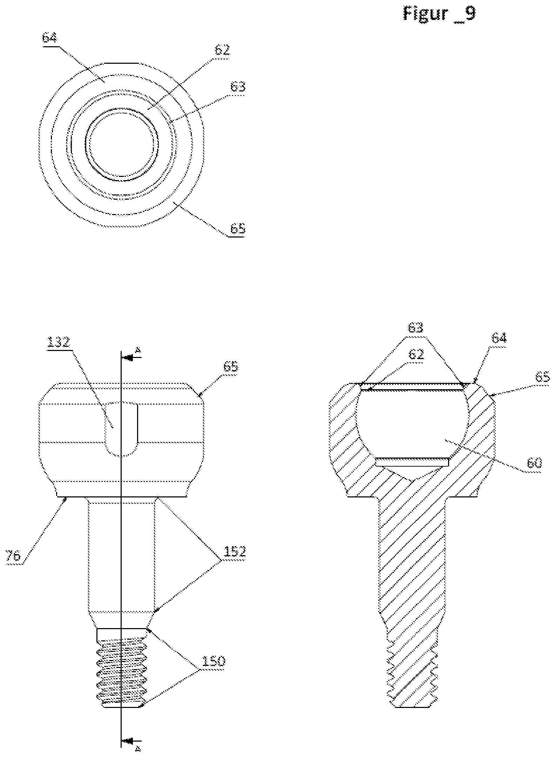

Die in Figur 9 gezeigte Ausführungsform der erfindungsgemäßen Abutmentbasis 50 entspricht der in Figur 7 dargestellten Ausführungsform mit einem - wie in Figur 8 mit 140 bezeichnetem - zylindrischen Abschnitt 152, der koronal zu dem Gewindeabschnitt 150 angeordnet ist. Wie die in Figur 7 gezeigte Ausführungsform wird die Ausführungsform von Figur 9 über ein an den Schlüsselflächen 132 angreifendes Werkzeug oder über einen Inbus apikal zu der Kugelkopfaufnahme 60, der nicht in der Zeichnung dargestellt ist, in den Grundkörper 10 eingeschraubt. Wie bei den Ausführungsformen gemäß Figuren 7 und 8 kann der Befestigungskopf 80 in die in Figur 9 gezeigte Abutmentbasis 50 wie zu den Figuren 7 und 8 beschrieben eingesetzt werden.

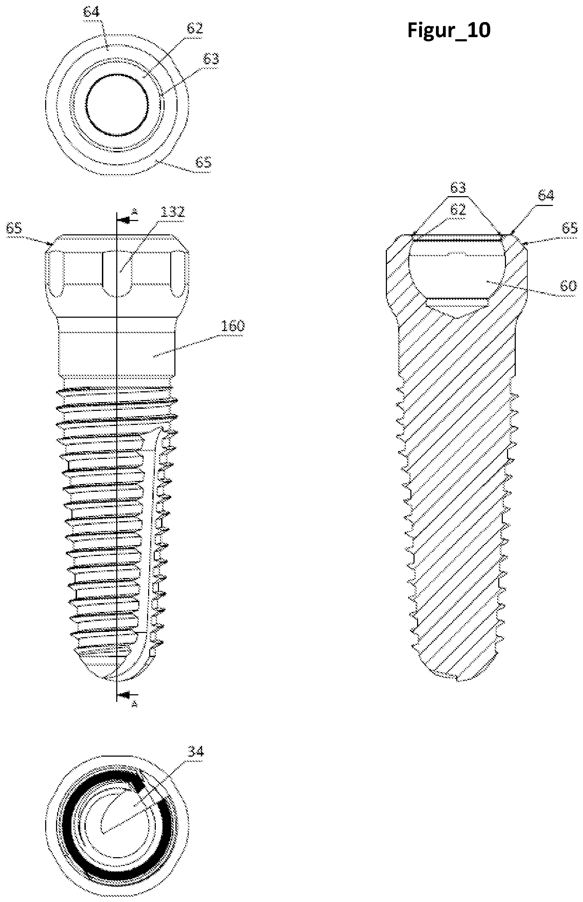

Bei der in Figur 10 gezeigten Ausführungsform ist die Abutmentbasis 50 mit dem Grundkörper 10 einstückig ausgebildet, so dass ein Eindrehen des Grundkörpers 10 über die an der Aussenseite der Kugelkopfaufnahme 60 der Abutmentbasis angeordneten Schlüsselflächen 132 in den Kiefer erfolgen kann. Nach dem Einschrauben des Implantats mit Kugelkopfaufnahme 60 in den Kiefer kann der Befestigungskopf 80 in die Kugelkopfaufnahme 60 eingeführt, ausgerichtet und mittels der Spannschraube 100 festgelegt werden. Bei dieser Ausführungsform wird auf sehr einfache Weise ermöglicht, dass ohne die Verwendung von Indexierelementen der Befestigungskopf 80 zur Aufnahme eines Dentalbauteils eingebracht, ausgerichtet und festgelegt werden kann. Dabei ist der Befestigungskopf 80 bevorzugt so ausgebildet, dass er ohne Anwendung einer thermischen Behandlung wie Kaltschrumpfen in die Kugelkopfaufnahme 60 eingebracht werden kann. Vorzugsweise wird daher ein vorzugsweise flexibles Material, beispielsweise ein Polymermaterial wie PEEK verwendet, das ein leichtes Einschieben des aus Peek gefertigten Kugelkopfes 82 in die Kugelkopfaufnahme 60 ermöglicht. Nach Ausrichten des Befestigungskopfes in der Kugelkopfaufnahme 60 auf die gewünschte Position des auf dem Befestigungskopf anzubringendem Dentalbauteil kann der Kugelkopf 82 durch Anziehen der Spannschraube 100 in seiner Position festgelegt werden. Im nächsten Schritt wird das Dentalbauteil auf dem Befestigungskopf 80 angeordnet und auf der Abutmentbasis 50 an Stirnrand 64 und Konusring 65 beispielsweise mittels Dentalzement verklebt. Diese Anordnung des Dentalbauteils ist bei allen erfindungsgemäßen Ausführungsformen des Abutments 40 mit Abutmentbasis 50 und Befestigungskopf 80 anwendbar.

### Bezugszeichenliste

10 Grundkörper
12 Bohrung
14 Innengewinde
16 Ringausnehmung
18 Führungsabschnitt
20 Formschlussabschnitt
22 Endabschnitt
26 Steg
28 Stirnrand
30 Eindrehelement/Innenmehrkantfläche
32 Innenwandung
34 Spannnut
36 Stegwurzel
38 Stegseitenfläche
40 Abutment
50 Abutmentbasis
52 Durchgangsbohrung
54 Führungsabschnitt
56 Aufnahmeabschnitt
58 Konusbund
60 Kugelkopfaufnahme
62 Schwenköffnung
63 Fase
64 Stirnfläche
65 Konusring
66 Führungsabschnitt
68 Formschlussabschnitt
70 Endabschnitt
72 Außenmehrkantfläche
74 Nut
76 Ringbund
80 Befestigungskopf
82 Kugelkopf
84 Durchgangsbohrung
86 Spannabschnitt
88 Innenkragen
90 Innengewinde
92 Schlitz
94 Führungsabschnitt für Spannschraube
96 Kugelkopfsegment
98 Befestigungsabschnitt
100 Spannschraube
102 Schraubenkopf
104 Außengewinde
106 Schraubenspitze
108 Innensechsrund
120 Halteschraube
122 Außengewinde
124 Konusbund
126 Schraubenkopf
128 Innensechsrund
130 Gewindeabschnitt
132 Schlüsselfläche
140 Rohrabschnitt
142 Aufnahmeabschnitt
144 Führungsabschnitt
150 Gewindeabschnitt
152 Zylinderabschnitt
160 Implantat mit Kugelkopfaufnahme

## Patentansprüche

1. Abutment (40) für einen Zahnersatz, mit
- einer im Wesentlichen zylindrischen Abutmentbasis (50) mit einer am bezogen auf die Anordnung im Kiefer koronalen Ende angeordneten Kugelkopfaufnahme (60), und
- einem im Wesentlichen zylindrischen Befestigungskopf (80) für Zahnersatz, wobei der Befestigungskopf (80) eine zur Längsachse des Befestigungskopfes koaxiale Durchgangsbohrung (84) und an dem der Kugelkopfaufnahme (60) zugewandten Ende einen Kugelkopf (82) aufweist,
- wobei der Kugelkopf (82) von der Kugelkopfaufnahme (60), vorzugsweise mindestens kugelkopfhälftig, umfasst in der Kugelkopfaufnahme (60) mittels eines Verspannmittels (100) verspannt festlegbar ist,
**dadurch gekennzeichnet, dass**
der Kugelkopf (82) zumindest zwei den Kugelkopf (82) unter Ausbildung von Kugelkopfsegmenten (96) zur Durchgangsbohrung (84) durchschneidende Schlitze (92) aufweist, wobei mindestens ein Schlitz (92) in einem Winkel von 0° bis 45°, vorzugsweise 0°, zur Längsachse der Durchgangsbohrung (84) angeordnet ist.

2. Abutment (40) nach Anspruch 1, wobei der Kugelkopf (82) zumindest drei, vier, fünf, sechs, acht oder zehn, vorzugsweise ein Vielfaches von zwei; den Kugelkopf (82) zur Durchgangsbohrung (84) durchschneidende Schlitze (92) aufweist.

3. Abutment (40) nach Anspruch 1 oder 2, wobei die axiale Länge mindestens eines der den Kugelkopf (82) zur Durchgangsbohrung durchschneidenden Schlitze (92) mindestens die Hälfte des Durchmessers des Kugelkopfes (82) beträgt.

4. Abutment (40) nach Anspruch 1, 2, oder 3, wobei zumindest ein den Kugelkopf (82) zur Durchgangsbohrung (84) durchschneidender Schlitz (92) zum apikalen Ende des Kugelkopfes (82) zumindest teilweise offen ist.

5. Abutment (40) nach einem der Ansprüche 1 bis 4, wobei die den Kugelkopf (82) durchdringende Durchgangsbohrung (84) einen Führungsabschnitt (94) und einen Spannabschnitt (86) und ein an dem, dem Führungsabschnitt (94) zugewandten Ende des Spannabschnittes (86) angeordnetes Innengewinde (90) aufweist, in das eine Spannschraube (100) als Verspannmittel einschraubbar ist, wobei die Spannschraube (100) in der Länge und im Durchmesser so bemessen ist, dass die Spannschraube in der Einschraubposition den Kugelkopf (82) mittels der Kugelkopfsegmente (96) in der Kugelkopfaufnahme (60) verspannt festlegt.

6. Abutment (40) nach Anspruch 5, wobei die den Kugelkopf (82) durchdringende Durchgangsbohrung (84) im Spannabschnitt (86) im Bereich der Schlitze (92) einen Innenkragen (88) aufweist, gegen den sich die Spannschraube (100) in der Einschraubposition abstützt und so die Kugelkopfsegmente mit der Kugelkopfaufnahme in der Einschraubposition positionssicher verspannt festlegt.

7. Abutment (40) nach einem der Ansprüche 1 bis 6, wobei die Abutmentbasis (50) an einer dem Befestigungskopf (80) zugewandten Schwenköffnung (62) ein Gewinde, vorzugsweise mit nur einen Gewindegang, aufweist, das mit einem korrespondierenden Gewinde, vorzugsweise mit nur einen Gewindegang, am Kugelkopf (82) des Befestigungskopfes (80), vorzugsweise im Bereich des größten Durchmesser des Kugelkopfes (82), beim Einbringen des Befestigungskopfes (80) in die Kugelkopfaufnahme (60) in Eingriff bringbar ist.

8. Abutment (40) nach einem der Ansprüche 1 bis 6, wobei die Abutmentbasis (50) an einer dem Befestigungskopf (80) zugewandten Schwenköffnung (62) mindestens eine Nut oder einen Vorsprung aufweist, die/der mit einem korrespondierenden Vorsprung oder einer korrespondierenden Nut am Kugelkopf (82) des Befestigungskopfes (80), vorzugsweise im Bereich des größten Durchmesser des Kugelkopfes (82), beim Einsetzen des Befestigungskopfes (80) in die Kugelkopfaufnahme (60) nach Art einer Nut-Feder-Verbindung in Eingriff bringbar ist.

9. Zahnimplantat mit einem Grundkörper (10) und mit einem Abutment nach einem der Ansprüche 1 bis 8.

10. Zahnimplantat mit einem Grundkörper (10) und mit einem Abutment nach einem der Ansprüche 1 bis 8, wobei der Grundkörper (10) und die Abutmentbasis (50) einstückig ausgebildet sind.

11. Zahnimplantat nach Anspruch 9, mit
- einem im Wesentlichen zylindrischen, in eine in einen Kieferknochen eingebrachte Bohrung einsetzbaren Grundkörper (10) mit einer Ringausnehmung (16) und mit einer koaxial zur Ringausnehmung (16) angeordneten Bohrung (12), die apikal ein Gewinde (14) zur Festlegung einer Halteschraube (120) aufweist;
- einem in die Ringausnehmung (16) des Grundkörpers (10) einsetzbaren Abutment (40) nach einem der Ansprüche 1 bis 8, wobei das Abutment (40) eine die Abutmentbasis (50) koaxial zur Ringausnehmung (16) durchdringende Bohrung (52) zur Aufnahme einer Halteschraube (120) aufweist; und
- einer Halteschraube (120) mit einem apikalen Außengewinde (122) und einem koronalen Schraubenkopf (126), wobei die Halteschraube (120) in die Bohrung (52) der Abutmentbasis (50) einsetzbar und in das Gewinde (14) des Grundkörpers (10) einschraubbar ist.

12. Zahnimplantat nach Anspruch 11, wobei der Grundkörper (10) und die Abutmentbasis (50) zueinander komplementäre Formschlussabschnitte (20;68) aufweisen,
wobei der Formschlussabschnitt (20) des Grundkörpers (10) und der Formschlussabschnitt (68) der Abutmentbasis (50) zwei bis sechs in der Form zueinander komplementäre Formschlusselementpaare (26;74) in Form von radial nach innen gerichteten und zur Längsachse des Grundkörpers parallelen Federstegen (26) am Grundkörper (10) und korrespondierenden Nuten (74) an der Abutmentbasis (50) nach Art einer Nut-Feder-Verbindung aufweisen.

13. Zahnimplantat nach einem der Ansprüche 11 oder 12, wobei in der Ringausnehmung (16) des Grundkörpers (10), vorzugsweise im Formschlussabschnitt (20), Eindrehelemente (30) angeordnet sind, die für den Eingriff eines formkomplementären Eindrehwerkzeuges zum Eindrehen des Grundkörpers (10) in den Kiefer ausgelegt sind.

14. Zahnimplantat nach einem der Ansprüche 9, 11 bis 13, wobei die Ringausnehmung (16) des Grundkörpers (10) einen apikalen Führungsabschnitt (18), einen koronal zu dem apikalen Führungsabschnitt (18) angeordneten Formschlussabschnitt (20) und einen koronal zu dem Formschlussabschnitt (20) angeordneten koronalen Endabschnitt (22) umfasst und wobei die Abutmentbasis (50) einen apikalen Führungsabschnitt (66), einen Formschlussabschnitt (68) und einen koronalen Endabschnitt (70), die mit den entsprechenden Abschnitten des Grundkörpers korrespondieren, umfasst.

15. Zahnimplantat nach Anspruch 11, wobei die Abutmentbasis (50) nach Art einer Rohr-in-Rohr-Lagerung, optional mit mindestens zwei zu korrespondierenden Abschnitten des Grundkörpers 10 nahezu äquiradialen Abschnitten, in der Ringausnehmung (16) des Grundkörpers (10) drehbar gelagert ist.

## Claims

1. Abutment (40) for a dental prosthesis, with
- a substantially cylindrical abutment base (50) having a ball head receptacle (60) located at the coronal end with respect to the arrangement in the jaw, and
- a substantially cylindrical fastening head (80) for dental prostheses, the fastening head (80) having a through bore (84) coaxial with the longitudinal axis of the fastening head and a ball head (82) at the end facing the ball head receptacle (60),
- wherein the ball head (82) comprised by the ball head receptacle (60), preferably at least half of the ball head, is clampable in the ball head receptacle (60) by means of a clamping means (100),
**characterized in that** the ball head (82) has at least two slots (92) intersecting the ball head (82) forming ball head segments (96) to the through bore (84), wherein at least one slot (92) is arranged at an angle of 0° to 45°, preferably 0°, to the longitudinal axis of the through bore (84).

2. The abutment (40) of claim 1, wherein the ball head (82) has at least three, four, five, six, eight or ten, preferably a multiple of two; slots (92) intersecting the ball head (82) to the through bore (84).

3. Abutment (40) according to claim 1 or 2, wherein the axial length of at least one of the slots (92) intersecting the ball head (82) to the through hole is at least half the diameter of the ball head (82).

4. Abutment (40) according to claim 1, 2, or 3, wherein at least one slot (92) intersecting the ball head (82) to the through bore (84) is at least partially open to the apical end of the ball head (82).

5. Abutment (40) according to any one of claims 1 to 4, wherein the through-bore (84) penetrating the ball head (82) has a guide section (94) and a clamping section (86) and an internal thread (90) arranged at the end of the clamping section (86) facing the guide section (94), into which a clamping screw (100) can be screwed as a clamping means, the clamping screw (100) being dimensioned in length and diameter in such a way that, in the screw-in position, the clamping screw fixes the ball head (82) in a clamped manner in the ball head receptacle (60) by means of the ball head segments (96).

6. Abutment (40) according to claim 5, wherein the through-bore (84) penetrating the ball head (82) has an inner collar (88) in the clamping section (86) in the region of the slots (92), against which the clamping screw (100) is supported in the screw-in position and thus fixes the ball head segments with the ball head receptacle in the screw-in position in a positionally secure manner.

7. Abutment (40) according to any one of claims 1 to 6, wherein the abutment base (50) has a thread, preferably with only one thread, at a swivel opening (62) facing the fastening head (80), which thread can be brought into engagement with a corresponding thread, preferably with only one thread, at the ball head (82) of the fastening head (80), preferably in the region of the largest diameter of the ball head (82), when the fastening head (80) is introduced into the ball head receptacle (60).

8. Abutment (40) according to any one of claims 1 to 6, wherein the abutment base (50) has at least one groove or projection at a swivel opening (62) facing the fastening head (80), which groove or projection can be brought into engagement with a corresponding projection or groove on the ball head (82) of the fastening head (80), preferably in the region of the largest diameter of the ball head (82), when the fastening head (80) is inserted into the ball head receptacle (60) in the manner of a tongue-and-groove connection.

9. Dental implant with a base body (10) and with an abutment according to any one of claims 1 to 8.

10. Dental implant with a base body (10) and with an abutment according to any one of claims 1 to 8, wherein the base body (10) and the abutment base (50) are formed in one-piece.

11. Dental implant according to claim 9, with
- a substantially cylindrical base body (10) insertable into a bore made in a jaw bone, with an annular recess (16) and with a bore (12) arranged coaxially to the annular recess (16) and having apically a thread (14) for fixing a retaining screw (120);
- an abutment (40) insertable into the annular recess (16) of the base body (10) according to any one of claims 1 to 8, wherein the abutment (40) has a bore (52) penetrating the abutment base (50) coaxially with the annular recess (16) for receiving a retaining screw (120); and
- a retaining screw (120) with an apical external thread (122) and a coronal screw head (126), the retaining screw (120) being insertable into the bore (52) of the abutment base (50) and being screwable into the thread (14) of the base body (10).

12. The dental implant of claim 11, wherein the base body (10) and the abutment base (50) have complementary form-fit portions (20;68), wherein the form-fit portion (20) of the base body (10) and the form-fit portion (68) of the abutment base (50) have two to six pairs of form-fit elements (26;74) which are complementary in shape to one another in the form of radially inwardly directed spring bars (26), which are parallel to the longitudinal axis of the base body, on the base body (10) and corresponding grooves (74) on the abutment base (50) in the manner of a tongue-and-groove joint.

13. Dental implant according to any one of claims 11 or 12, wherein, in the annular recess (16) of the base body (10), preferably in the form-fit section (20), screw-in elements (30) are arranged which are designed for the engagement of a form-complementary screw-in tool for screwing the base body (10) into the jaw.

14. A dental implant according to any one of claims 9, 11 to 13, wherein the annular recess (16) of the base body (10) comprises an apical guide portion (18), a form-fit portion (20) positioned coronal to the apical guide portion (18), and a coronal end portion (22) positioned coronal to the form-fit portion (20), and wherein the abutment base (50) comprises an apical guide portion (66), a positive locking portion (68) and a coronal end portion (70) corresponding to respective portions of the base body.

15. Dental implant according to claim 11, wherein the abutment base (50) is rotatably mounted in the annular recess (16) of the base body (10) in the manner of a tube-in-tube mounting, optionally with at least two portions of the base body 10 almost equiradial to corresponding portions.

## Revendications

1. Structure d'implant (40) pour une prothèse dentaire, pourvue
- d'une base de structure d'implant (50) sensiblement cylindrique, dotée d'un logement de tête sphérique (60), placé sur l'extrémité coronale, en rapport à la disposition dans la mâchoire,
- d'une tête de fixation (80) sensiblement cylindrique pour une prothèse dentaire, la tête de fixation (80) comportant un trou de passage (84) coaxial par rapport à l'axe longitudinal de la tête de fixation et sur l'extrémité qui fait face au logement de tête sphérique (60), une tête sphérique (82),
- la tête sphérique (82) étant susceptible d'être immobilisée en étant entourée par le logement de tête sphérique (60), de préférence au moins à raison de la moitié de la tête sphérique, dans le logement de tête sphérique (60) en étant contrainte à l'aide d'un moyen de contrainte (100),
**caractérisée en ce que**
la tête sphérique (82) comporte au moins deux fentes (92) coupant la tête sphérique (82) vers le trou de passage (84), en formant des segments de tête sphérique (96), au moins une fente (92) étant placée sous un angle de 0° à 45°, de préférence de 0°, vers l'axe longitudinal du trou de passage (84).

2. Structure d'implant (40) selon la revendication 1, la tête sphérique (82) comportant au moins deux, quatre, cinq, six, huit ou dix, de préférence un nombre multiple de deux de fentes (92) qui coupent la tête sphérique (82) vers le trou de passage (84).

3. Structure d'implant (40) selon la revendication 1 ou 2, la longueur axiale d'au moins l'une des fentes (92) qui coupe la tête sphérique (82) vers le trou de passage s'élevant à au moins la moitié du diamètre de la tête sphérique (82) t.

4. Structure d'implant (40) selon la revendication 1, 2, ou 3, au moins une fente (92) qui coupe la tête sphérique (82) vers le trou de passage (84) étant au moins partiellement ouverte vers l'extrémité apicale de la tête sphérique (82).

5. Structure d'implant (40) selon l'une quelconque des revendications 1 à 4, le trou de passage (84) traversant la tête sphérique (82) comportant un tronçon de guidage (94) et un tronçon de serrage (86) et un taraudage (90) placé sur l'extrémité du tronçon de serrage (86) qui fait face au tronçon de guidage (94), dans lequel une vis de serrage (100) est susceptible d'être vissée, en tant que moyen de contrainte, la vis de serrage (100) étant dimensionnée en longueur et en diamètre de telle sorte, que dans la position vissée, la vis de serrage immobilise la tête sphérique (82) par contrainte dans le logement de tête sphérique (60), au moyen des segments (96) de tête sphérique (60).

6. Structure d'implant (40) selon la revendication 5, le trou de passage (84) traversant la tête sphérique (82) comportant dans le tronçon de serrage (86), dans la zone des fentes (92) une collerette interne (88) contre laquelle la vis de serrage (100) s'appuie dans la position de vissage et immobilise ainsi par contrainte et en position sûre dans la position se vissage les segments de tête sphérique avec le logement de tête sphérique.

7. Structure d'implant (40) selon l'une quelconque des revendications 1 à 6, la base de structure d'implant (50) comportant sur un orifice de pivotement (62) qui fait face à la tête de fixation (80) un filetage, doté de préférence d'un seul pas de filet, qui est susceptible d'être amené en engagement avec un filetage correspondant, doté de préférence d'un seul pas de filet, sur la tête sphérique (82) de la tête de fixation (80), de préférence dans la zone du plus grand diamètre de la tête sphérique (82), lors de l'introduction de la tête de fixation (80) dans le logement de tête sphérique (60) .

8. Structure d'implant (40) selon l'une quelconque des revendications 1 à 6, la base de structure d'implant (50) comportant sur un orifice de pivotement (62) qui fait face à la tête de fixation (80) au moins une rainure ou une saillie, qui est susceptible d'être amenée en engagement avec une saillie correspondante ou avec une rainure correspondante sur la tête sphérique (82) de la tête de fixation (80), de préférence dans la zone du plus grand diamètre de la tête sphérique (82), lors de l'insertion de la tête de fixation (80) dans le logement de tête sphérique (60), à la manière d'un assemblage par rainure et languette.

9. Implant dentaire, pourvu d'un corps de base (10) et d'une structure d'implant selon l'une quelconque des revendications 1 à 8.

10. Implant dentaire, pourvu d'un corps de base (10) et d'une structure d'implant selon l'une quelconque des revendications 1 à 8, le corps de base (10) et la base de structure d'implant (50) étant conçus en monobloc.

11. Implant dentaire selon la revendication 9, pourvu
- d'un corps de base (10) sensiblement cylindrique, insérable dans un perçage ménagé dans un maxillaire, pourvu d'un évidement annulaire (16) et d'un perçage (12) placé de manière coaxiale par rapport à l'évidement annulaire (16), qui côté apical comporte un taraudage (14), pour immobiliser une vis de maintien (120) ;
- d'une structure d'implant (40) selon l'une quelconque des revendications 1 à 8, insérable dans l'évidement annulaire (16) du corps de base (10), la structure d'implant (40) comportant un perçage (52) traversant la base de structure d'implant (50) de manière coaxiale par rapport à l'évidement annulaire (16), destiné à recevoir une vis de maintien (120) ; et
- d'une vis de maintien (120) pourvue d'un filetage extérieur (122) apical et d'une tête de vis (126) coronale, la vis de maintien (120) étant insérable dans le perçage (52) de la base de structure d'implant (50) et susceptible d'être vissée dans le taraudage (14) du corps de base (10).

12. Implant dentaire selon la revendication 11, le corps de base (10) et la base de structure d'implant (50) comportant des tronçons (20 ; 68) à complémentarité de forme, mutuellement complémentaires,
le tronçon (20) à complémentarité de forme du corps de base (10) et le tronçon (68) à complémentarité de forme de la base de structure d'implant (50) comportant de deux à six paires d'éléments (26 ; 74) à complémentarité de forme, de forme mutuellement complémentaire, sous la forme de barrettes élastiques (26) sur le corps de base (10), dirigées vers l'intérieur en direction radiale et parallèles à l'axe longitudinal du corps de base et de rainures (74) complémentaires sur la base de structure d'implant (50), à la manière d'un assemblage par rainure et languette.

13. Implant dentaire selon l'une quelconque des revendications 11 ou 12, dans l'évidement annulaire (16) du corps de base (10), de préférence dans le tronçon (20) à complémentarité de forme étant placés des éléments à visser (30) qui sont conçus pour l'engagement d'un outil à visser de forme complémentaire, pour visser le corps de base (10) dans la mâchoire.

14. Implant dentaire selon l'une quelconque des revendications 9, 11 à 13, l'évidement annulaire (16) du corps de base (10) comprenant un tronçon de guidage (18) apical, un tronçon (20) à complémentarité de forme placé de manière coronale par rapport au tronçon de guidage (18) apical et un tronçon d'extrémité (22) coronal, placé de manière coronale par rapport au tronçon (20) à complémentarité de forme et la base de structure d'implant (50) comprenant un tronçon de guidage (66) apical, un tronçon (68) à complémentarité de forme et un tronçon d'extrémité (70) coronal, qui correspondent avec les tronçons associés du corps de base.

15. Implant dentaire selon la revendication 11, la base de structure d'implant (50) étant logée en rotation, à la manière d'un logement « tube en tube », en option par au moins deux tronçons pratiquement équiradiaux par rapport à des tronçons correspondants du corps de base (10) dans l'évidement annulaire (16) du corps de base (10) .
